# EUROPEAN PATENT APPLICATION

(11) **EP 2 153 888 A2**
(43) Date of publication of application: **17.02.2010**
(21) Application number: 09159066.1
(22) Date of filing: 29.04.2009
(51) Int. Cl.: B01F 7/24, B01F 13/10, A01K 5/00

(54) **Auger For Vertical Mixer**

(30) Priority: 29.04.2008 CA 2627001; 29.04.2008 CA 2653082; 29.04.2008 CA 2653746; 28.10.2008 CA 2641928; 27.02.2009 CA 2656353
(71) Applicant: Jay-Lor International Inc., Orton, Ontario L0N 1NO (CA)
(72) Inventor: Tamminga, Jakob, Orton Ontario L0N 1N0 (CA)
(74) Representative: Petsis, Christos

(57) **Abstract**

A vertical mixer for mixing bulk material is disclosed. The vertical mixer includes an auger having an auger post and flighting including upper flighting and a lower flight. In one example, the auger comprises cutting knives positioned on an outside edge of the flighting for cutting bulk material during rotation of the auger. The auger also includes an angled knife connected to an outside edge of the flighting and oriented so that a blade of the angled knife is positioned at an angle suitable for allowing the angled knife to at least partially cut loosened bulk material that may be bridging in the mixing chamber thereby at least partially preventing or reducing bridging in the mixing chamber and allowing the bulk material to fall towards the floor of the mixing chamber and increasing the cutting action of the cutting knives.

## Description

### Field of the Invention

The present invention is directed to vertical mixers and more specifically to vertical augers for use with vertical mixers.

### Background

Feed for livestock typically includes different ingredients that are required to be mixed together before they are provided to the livestock. For example, hay may be mixed with a variety of feed supplements, such as vitamins, to provide a bulk material. Various mixers are known that are designed to mix the bulk material to a desired extent. Vertical mixers are disclosed, for instance, in U.S. Patent No. 5,863,122 (Tamminga) and in U.S. Patent No. 5,462,354 (Neier).

Many prior art feed mixers include a tub having one or more walls and a floor defining a mixing chamber, with a mixing means, typically one or more augers vertically positioned in the mixing chamber comprising knives for cutting the bulk material as the auger rotates. In conventional use, the components of the bulk material are cut and mixed together by rotation of the auger. After mixing, the mixed bulk material is removed from the tub via a discharge opening and dispensed as appropriate, usually through the use of a conveyor.

The amount of bulk material to be mixed is usually relatively large. For example, a load of bulk material in a mixer can weigh as much as 10,000 lbs. or more. Mixing of the bulk material is typically slow and unloading of mixed bulk material is also very time consuming thereby increasing wear on the machine, fuel consumption, man hours, maintenance, etc.

A further issue associated with augers for vertical mixers is that rotation of the auger has a tendency to pack mixing bulk material toward the outer perimeter of the mixing chamber. This can also push bulk material up the side wall of the mixing chamber and over the top of the tub resulting in both a loss of bulk material and a decreased usable volume of the tub of the mixing chamber.

Further, once a bale has been placed in the mixing chamber and loosened such that it has lost most of its bale form and/or loose material has separated from the original bale, bridging of the loosened longer fibrous material can occur. Bridging of the loosed bulk material typically takes place substantially midway up the auger and therefore knives on the top flighting are generally useless at reducing or preventing bridging as they do not directly impact the bridging of loosened longer fibrous material in the bulk material. Additionally, a less densely packed area, substantially hollow, is formed at the bottom of the auger caused by the bridging longer fibrous material in the bulk material which, among other things, can result in a less efficient mix quality and/or increasing mix time. Additionally, the hay bale core can have a tendency to not process properly.

Vertical mixers tend to have difficulty discharging longer fibrous materials such as straw or hay. While discharging, fibrous materials are trapped by wrapping around the back edge of the discharge opening. This can both impede the flow of mixed bulk material out of the door and create a pressure point on the mixer wall at the bottom of the back edge of the discharge opening every time the end of the auger travels in close proximity to it. This pressure point can cause the wall of the mixer to bend out, can cause stress on both the power unit and the driveline/gearbox to the point of breaking components such as shear bolts, can deform the discharge opening, in particular the back edge thereof and can impede the door from closing. Loud noises associated with some of these side effects can also scare the livestock which can cause a reduction in quality and/or quantity of milk or meat production.

A further problem brought on at least partially from the trapping of the fibrous materials around the edge of the discharge opening is uneven discharge of the mixed bulk material. Based on the feeding pattern of livestock, for example cows, this can have a negative impact on milk/meat production.

A need therefore exists for an auger for a vertical mixer that overcomes or mitigates at least one of the problems outlined above or a further problem associated with existing augers and/or vertical mixers.

### Summary

A vertical mixer for mixing bulk material is provided including an auger having an auger post and flighting including upper flighting and a lower or bottom flight. In one example, the auger includes an angled knife connected to an outside edge of the flighting and oriented so that a blade of the angled knife is positioned at an angle suitable for allowing the angled knife to at least partially cut loosened bulk material that may be bridging in the mixing chamber thereby at least partially preventing or reducing bridging in the mixing chamber and allowing the bulk material to fall towards the floor of the mixing chamber increasing the cutting action of the cutting knives.

The vertical mixer for mixing bulk material may further or alternatively be provided comprising an auger for mixing bulk material. The auger uses one or more cutting knives positioned at a peripheral location directly or indirectly on a lower flight of the auger in a location that passes through material trapped on the discharge opening of the mixing chamber when the auger is rotated. The one or more cutting knives cuts trapped material away from the discharge opening thereby freeing the trapped material and allowing for quicker discharge of the mixed bulk material. The one or more cutting knives may be substantially vertically oriented or may be substantially parallel to the discharge opening.

In one illustrative embodiment there is provided a vertical mixer for mixing bulk material, the vertical mixer comprising:
a mixing chamber for receiving the bulk material, the mixing chamber being defined by a floor and a peripheral wall, the mixing chamber comprising a discharge opening including a back edge, the discharge opening for discharging mixed bulk material, and a door for covering the discharge opening, the door moveable between an open and closed position;
a vertical auger in the mixing chamber, the vertical auger comprising an auger post;
   depending flighting comprising an outside edge defining the perimeter of the flighting, the flighting including upper flighting positioned above a lower flight;
   an angled knife connected to the outside edge of the upper flighting, the angled knife comprising a blade oriented at an angle upward relative the adjacent flighting to at least partially cut loosened bulk material bridging in the mixing chamber.

In another embodiment of the vertical mixer outlined above, the vertical auger further comprises at least one cutting knife positioned on the outer edge of the flighting for cutting bulk material as the auger rotates, the cutting knife oriented at an angle closer to parallel with the floor of the mixing chamber than the angled knife.

In another embodiment of the vertical mixer outlined above, the angled knife is connected to the upper flighting in a section below the top of the flight.

In another embodiment of the vertical mixer outlined above, the blade is oriented at an angle of from about 15° to about 110°, about 25° to about 90°, about 30° to about 90°, about 30° to about 60°, approximately 45°, at least approximately 30° or at least approximately 45° from the floor of the mixing chamber.

In another embodiment of the vertical mixer outlined above, the blade is oriented to draw bulk material into the flighting.

In another embodiment of the vertical mixer outlined above, the front end of the blade is further from the auger post than the rear end of the blade to draw bulk material into the flighting.

In another embodiment of the vertical mixer outlined above, the angled knife further comprises:
a connector plate comprising an auger connection section for connection with the auger flighting and a blade connector section for connection to the blade.

In another embodiment of the vertical mixer outlined above, the angled knife is mounted rearward and adjacent one of the cutting knives.

In another embodiment of the vertical mixer outlined above, the vertical auger further comprises an additional angled knife.

In another embodiment of the vertical mixer outlined above, the additional angled knife is connected to the lower flight or the upper flighting.

In another embodiment of the vertical mixer outlined above, the additional angled knife is mounted rearward and adjacent the angled knife.

In another embodiment of the vertical mixer outlined above, the blade of the angled knife and the cutting knife are integrated into one knife.

In another embodiment of the vertical mixer outlined above, on the vertical auger the lower flight comprises a front leading edge and an outside edge defining an outside footprint of the lower flight; and the vertical auger further comprises:
a first lower cutting blade connected indirectly or directly to the lower flight of the vertical auger at a first connection point, the first lower cutting blade situated to pass proximate the back edge of the discharge opening during rotation of the auger to cut material trapped on the back edge of the discharge opening.

In another embodiment of the vertical mixer outlined above, the first connection point is proximate the leading edge of the lower flight.

In another embodiment of the vertical mixer outlined above, the vertical auger further comprises:
a second lower cutting blade connected indirectly or directly to the lower flight of the vertical auger at a second connection point, the second lower cutting blade situated to pass proximate the back edge of the discharge opening during rotation of the auger to cut material trapped on the back edge of the discharge opening; and
wherein the first connection point is proximate the front leading edge of the lower flight and the second connection point is rearward of the first connection point.

In another embodiment of the vertical mixer outlined above, the first lower cutting blade is oriented to be substantially parallel to the peripheral wall at the back edge of the opening.

In another embodiment of the vertical mixer outlined above, the second lower cutting blade is oriented to be substantially parallel to the peripheral wall at the back edge of the opening.

In another embodiment of the vertical mixer outlined above, the first lower cutting blade is oriented to be substantially vertical.

In another embodiment of the vertical mixer outlined above, the second lower cutting blade is oriented to be substantially vertical.

In another embodiment of the vertical mixer outlined above, the first lower cutting blade comprises a shallow angled front corner having an angle of between about 1 and 45 degrees or about 15 degrees.

In another embodiment of the vertical mixer outlined above, the second lower cutting blade comprises a shallow angled front corner having an angle of between about 1 and 45 degrees or about 20 degrees.

In another embodiment of the vertical mixer outlined above, the first lower cutting blade is mounted so that a back end of the first cutting knife is further from a point on the wall of the mixing chamber than a front end of the first lower cutting blade when passing the point during rotation of the auger.

In another embodiment of the vertical mixer outlined above, the second lower cutting blade is mounted so that a back end of the second lower cutting blade is further from a point on the wall of the mixing chamber than a front end of the second lower cutting blade when passing the point during rotation of the auger.

In another embodiment of the vertical mixer outlined above, the vertical auger further comprises:
a slide plate connected to the lower flight for guiding bulk material, the slide plate comprising:
   a front corner;
   a bottom edge; and
   a top edge opposite the bottom edge;
      the slide plate extending from the lower flight beyond the outside edge of the lower flight toward the peripheral wall of the mixing chamber; and
      wherein the first lower cutting blade is connected to the slide plate.

In another embodiment of the vertical mixer outlined above, the vertical auger further comprises:
a second lower cutting blade connected to the slide plate at a second connection point, the second lower cutting blade situated to pass proximate the back edge of the discharge opening during rotation of the auger to cut material trapped on the back edge of the discharge opening;
wherein the first connection point is near the top edge and the front corner of the slide plate and the second connection point is rearward of the first connection point near the top edge of the slide plate.

In another embodiment there is provided a vertical mixer for mixing bulk material, the vertical mixer comprising:
a mixing chamber for receiving the bulk material, the mixing chamber being defined by a floor and a peripheral wall, the mixing chamber comprising a door for allowing exit of mixed bulk material;
a vertical auger in the mixing chamber, the vertical auger having an auger post and flighting including a lower flight; and
   a spacer device directly or indirectly connected to the lower flight of the auger, the spacer device comprising a component extending below the bottom flight of the auger for contact with the floor of the mixing chamber.

### Brief Description of the Drawings

Figure 1 is an isometric cutaway view of one embodiment of a vertical mixer with a single auger with an example of an angled knife;
Figures 2A, 2B and 2C are top, isometric and side views, respectively, of one embodiment of an auger for a vertical mixer with an angled knife;
Figures 3A and 3B are isometric views of an assembled and exploded, respectively, angled knife for an auger for a vertical mixer;
Figures 4A, 4B and 4C are top, exploded and side views, respectively, of another embodiment of an auger for a vertical mixer with multiple angled knives;
Figure 5 is an isometric cutaway view of another embodiment of a vertical mixer with dual augers with an example of an angled knife;
Figure 6 is an isometric view illustrating one example of a vertical mixer;
Figure 7 is a side view illustrating one example of an auger for a vertical mixer;
Figure 8A is a top view of the auger for a vertical mixer illustrated in Figure 7;
Figure 8B is an elevated view of the auger for a vertical mixer illustrated in Figure 7;
Figure 8C is a side view of the auger for a vertical mixer illustrated in Figure 7;
Figure 9A is an exploded isometric view of an auger for a vertical mixer including both lower cutting blades and angled knives;
Figure 9B is an isometric view of an auger for a vertical mixer including both lower cutting blades and angled knives;
Figure 9C is a top view of an auger for a vertical mixer including both lower cutting blades and angled knives;
Figure 10A is an isometric view illustrating another example of a vertical mixer with the door in the open position comprising an example of an auger;
Figure 10B is top view of the vertical mixer and auger of Figure 10A;
Figure 11A is a graph illustrating the power, speed and torque of a conventional vertical mixer during a mixing and unloading phase; and
Figure 11B is a graph illustrating the power, speed and torque of a vertical mixer having at least two cutting knives during a mixing and unloading phase.

### Detailed Description

### ANGLED KNIFE

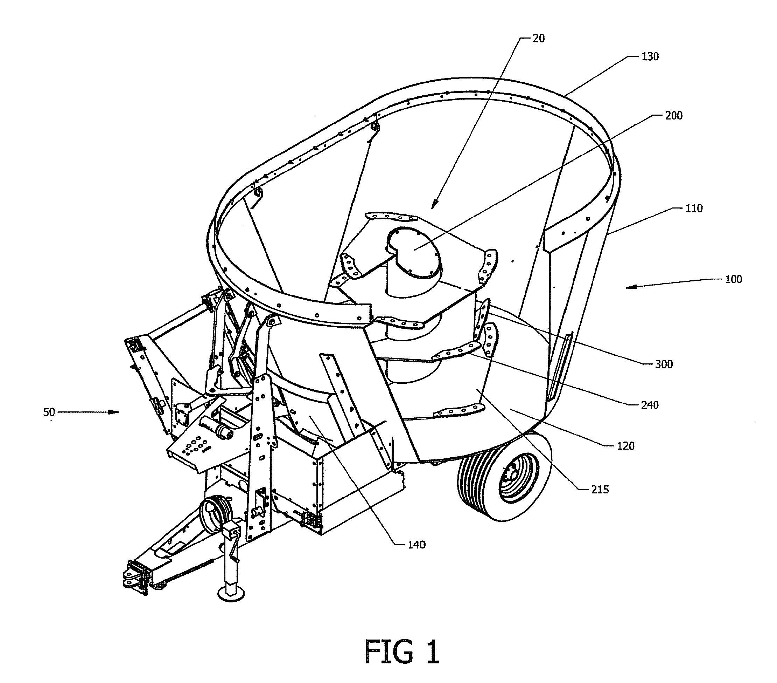

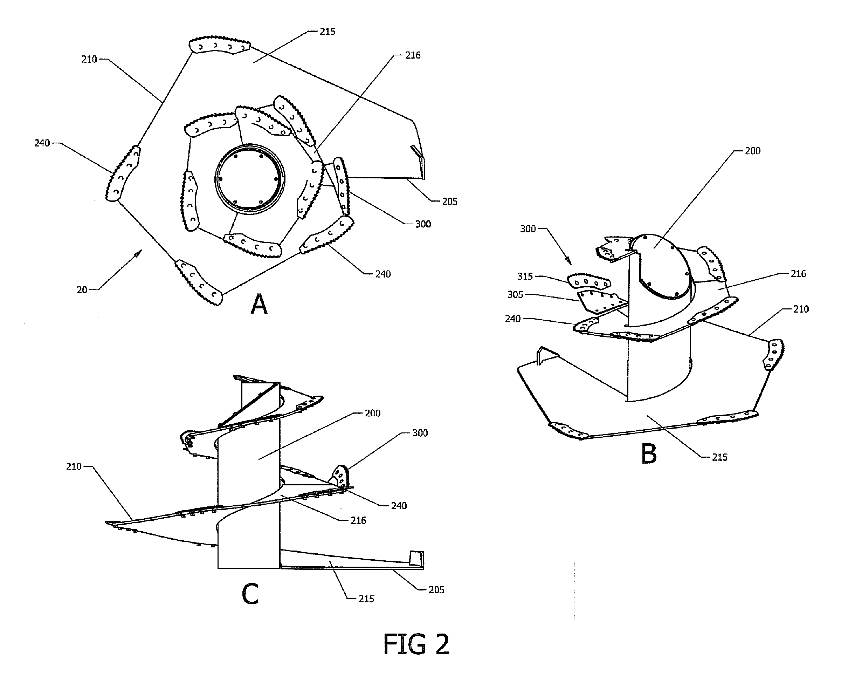

One embodiment of a vertical mixer having an example of a vertical auger is described with reference to Figure 1. A vertical mixer 50 has a mixing chamber 100 for receiving bulk material to be mixed. The mixing chamber 100 has an open top 130 for receiving the bulk material, a floor 120, and depending walls 110 defining the mixing chamber 100. A vertical auger 20 is situated in the mixing chamber 100 in a conventional fashion. The mixing chamber 100 includes a door 140 through which mixed bulk material exits the mixing chamber 100 when the door 140 is opened. The auger 20 includes cutting knives 240 connected along an outside edge of the flighting of the auger 20 for cutting bulk material as the auger rotates. The cutting knives 240 generally have an orientation of parallel or near parallel the floor 120 of the mixing chamber 100. As the auger 20 rotates, bulk material is mixed and cut. However, bridging may occur as the loosened fibrous bulk material, such as hay, is forced upwards and tends towards the outer perimeter of the mixing chamber 100 as well as toward the top of the auger 20. To reduce and/or mitigate this problem, an angled knife 300 is mounted to the auger 20 along an outside edge and oriented so that the angled knife 300 is more upright than the cutting knives 240. Typically, the angled knife 300 is oriented to angle upward relative the adjacent flighting to which the angled knife 300 is mounted. The angled knife 300 may be mounted behind one of the cutting knives 240. The angled knife 300 may be mounted above the lower flight of the auger 20 as will be explained in more detail below with reference to Figures 2, 4 and 5. The angled knife 300 is positioned at a suitable location on the auger 20 to cut a hole in the bridging fibrous bulk material allowing the material to drop down into the auger 20. This allows the cutting knives 240 to go be exposed to the fibrous bulk material more quickly and more often during rotation of the auger 20 thereby increasing cutting of the fibrous bulk material by the cutting knives 240.

One embodiment of an example of an auger 20 is shown with reference to Figures 2A, 2B and 2C. As will be appreciated by one of ordinary skill in the art, the auger 20 includes an auger post 200 around which there is depending flighting 210 for mixing bulk material deposited in the mixing chamber 100 during rotation of the auger 20.
Figure 2B shows the auger 20 with an exploded view of an example of an angled knife 300 before attachment to the auger flighting 210. The angled knife 300 is connected along the outside of the flighting 210. As shown in Figs. 2A, 2B and 2C the angled knife 300 may be connected rearwards of a cutting knife 240. The angled knife 300 includes a blade 315 oriented to be angled upwards relative the cutting knife 240. Typically, the angled knife 300 has the blade 315 with an angle of between about 15° to about 110° from the floor 120 which is generally substantially horizontal. The blade 315 may alternatively have an angle of between about 25° and about 90°, between about 30° and about 60° or alternatively may have an angle of approximately 45°. Alternatively, the blade 315 may be oriented to have an angle of at least 30° or at least 45°. It is important that the angled knife 300 have an angle suitable for at least partially cutting into the loosened fibrous bulk material that may have bridged during rotation of the auger 20 so that the bridging is reduced or eliminated and the fibrous bulk material more easily falls to the bottom region of the auger 20 so that the cutting knives 240 are more effective in cutting the bulk material and/or the flighting 210 is more effective at mixing the bulk material.

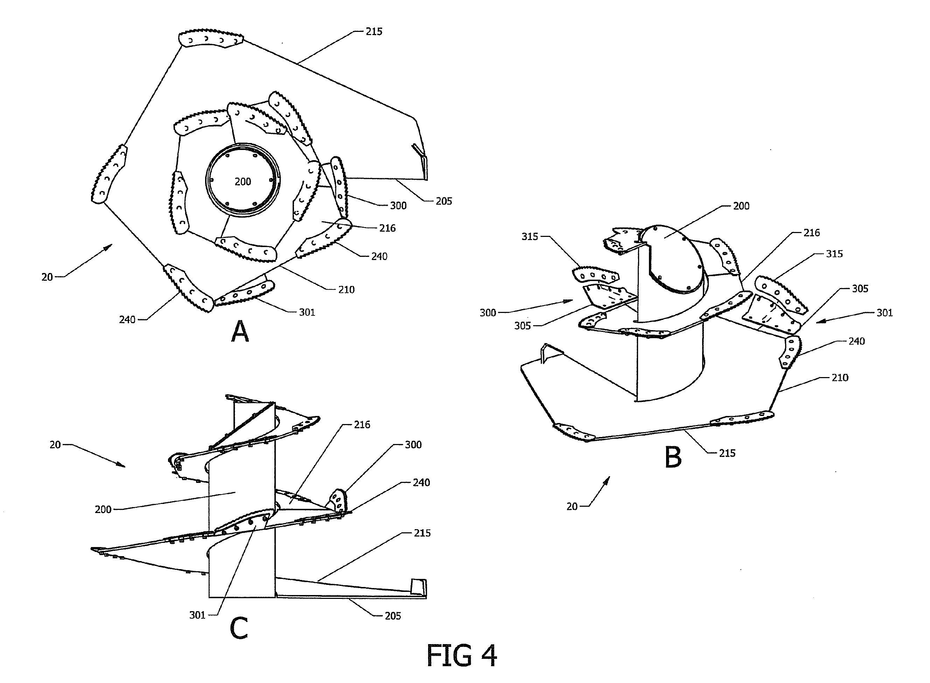

The angled knife 300 is shown in Figures 2A, 2B and 2C as being attached to the auger 20 on the flighting 210. More specifically, the angled knife 300 may be attached to a region of the flighting of the auger 20 above the lower flighting 215. This region will be referred to as the upper flighting 216 and includes all flighting of the auger 20 partially or fully above a lower revolution of flighting, referred to as the lower flighting 215. When an additional angled knife is used, as will be described with reference to Figures 4A, 4B and 4C, the additional angled knife may be located on any region of the flighting 210 including the upper 216 and lower flighting 215.

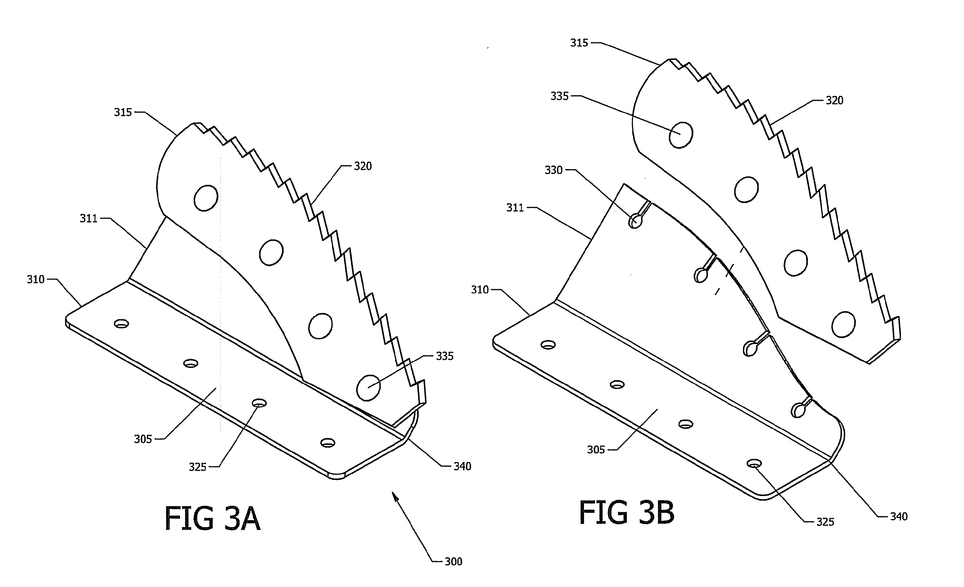

Figures 2A, 2B and 2C illustrate the angled knife 300 as being connected to the auger flighting 210 using a connector plate 305. The connector plate 305 is mounted to the auger flighting 210 and includes a mounting section (shown in Figures 3A and 3B) for mounting the blade 315 thereon. It will be appreciated that the angled knife 300 may be connected to the auger 20 using any suitable method such as bolting, riveting, welding, etc. Alternatively, the angled knife 300 may be a single piece having the connector plate 305 and the blade 315 integrated together. The connector plate 305 is shown as being connected to the underside of the auger flighting 210. This is not meant to be limiting. The connector plate 305 may alternatively be connected to the upper side, or both sides of the flighting 210.

The angled knife 300, when mounted on the auger 20, provides for at least one of the following. Less bridging is experienced during mixing and cutting of loosened fibrous bulk material. As a result, the bulk material and particularly fibrous bulk material such as hay, is cut and mixed more quickly. As such, fewer man hours are required to process the bulk material for use, for example as feed, bedding, etc., as demonstrated for example in the test results outlined below. Less bulk material is thrown and lost out of the top of the mixing chamber 100 because the mixing bulk material is encouraged to drop down towards the floor 120 of the mixing chamber 100 where the cutting knives 240 can more effectively cut the fibrous bulk material. Because of the dropping action of the bulk material and the decrease in bridging, a larger volume of fibrous bulk material may be processed by a vertical mixer as compared to a similar vertical mixer without an angled knife attached to the auger. This is demonstrated for example in the test results outlined below.

The angled knife 300 may be oriented to draw bulk material into the flighting 210 of the auger 20. One orientation that may be used in doing so is to place the front end of the angled knife 300, relative to the direction of the rotation of the auger 20, at a distance further from the auger post 200 than the rear end of the angled knife 300. By doing so, bulk material contacting the angled knife 300 is drawn into the flighting 210 instead of being pushed outward toward the wall 110 of the mixing chamber 100.

Figures 3A and 3B show an illustrative embodiment of an angled knife 300. As outlined above, the angled knife 300 may be connected to the auger in an suitable manner such that the angle knife 300 is oriented to be at an angle upwards from the adjacent flighting to which the angled knife 300 is connected for cutting loosened fibrous material that may be bridging in the mixing chamber. Figures 3A and 3B simply show an illustrative embodiment that may be used for connecting the angled knife 300 to an auger.

The angled knife 300 comprises a blade 315 for cutting bulk material. The blade may optionally have a serrated edge 320 to increase cutting efficiency. Further included is a connector plate 305 for connection to the flighting of the auger and for attachment to the blade 315. The embodiment of the connector plate 305 illustrated in Figures 3A and 3B includes a bend 340 separating an auger connector section 310 for connection with the flighting of the auger and a blade connector section 311 for connection with the blade 315.

The auger connector section 310 includes holes 325 through which fasteners, such bolts or rivets, may be used for connecting the connector plate 305 to the auger. It will be appreciated by one of ordinary skill in the art that any suitable number and orientation of holes 325 may be used for allowing the connection. Alternatively, the connector plate 305 may be welded to the auger flighting thereby alleviated the need for any holes 325.

The connector section 311 includes holes 330 through which fasteners, such as bolts or rivets, may be used for connecting the blade 315 to the connector plate 305. It will be appreciated by one of ordinary skill in the art that any suitable number and orientation of holes 330 may be used for allowing the connection. Alternatively, the connector plate 305 may be welded to the blade 315 thereby alleviated the need for any holes 330. It will be appreciated that the method attachment is not essential to the invention and that the embodiment shown in the Figures is merely illustrative.

The bend 340 may be of any suitable angle to bring the blade 315 into an orientation suitable for cutting bulk material and particularly fibrous bulk material that may be clumped or bridged in the mixing chamber as a result of rotation of the auger. For example, the bend 340 may be of an angle suitable to bring the blade 315 into an orientation that is between about 15° to about 110° from the floor of the mixing chamber which is generally substantially horizontal. The bend 340 may alternatively have an angle of between about 25° and about 90°, between about 30° and about 90°, between about 30° and about 60°, of at least about 30°, of at least about 45° or alternatively may have an angle of approximately 45°.

Alternatively, the connector plate 305 and the blade 315 may be integrated together into a single component.

Another embodiment of an example of an auger 20 is shown with reference to Figures 4A, 4B and 4C. The auger 20 includes an auger post 200 with depending flighting 210 including a lower flight 215 and upper flighting 216 similar to the auger described with reference to Figures 2A, 2B and 2C. As previously described with reference to Figure 1, the auger 20 includes cutting knives 240 connected along an outside edge of the flighting 210 of the auger 20 for cutting bulk material as the auger rotates. The cutting knives 240 generally have an orientation of parallel or near parallel the floor of the mixing chamber. The auger 20 includes an angled knife 300 connected along the outside of the flighting 210. As shown in Figs. 4A, 4B and 4C the angled knife 300 in an exploded view may be connected rearwards of the cutting knife 240. The angled knife 300 includes a blade 315 oriented to be angled upwards relative the cutting knife 240. Typically, the angled knife 300 has the blade 315, as shown in Figure 4B which shows the angled knife 300 in exploded view, with an angle of between about 15° to about 110° from the floor 120 which is generally substantially horizontal. The angled knife 300 may alternatively have an angle of between about 25° and about 90°, between about 30° and about 60°, at least 30°, at least 45° or alternatively may have an angle of approximately 45°. It is important that the angled knife 300 have an angle suitable for at least partially cutting into the loosened fibrous bulk material that may have bridged during rotation of the auger 20 so that the bridging is reduced or eliminated and the fibrous bulk material more easily falls to the bottom region of the auger 20 so that the cutting knives 240 are more effective in cutting the bulk material and/or the flighting 210 is effective at mixing the bulk material.

The angled knife 300 is shown in Figures 4A, 4B and 4C as being attached to the auger 20 on the upper flighting 216. One or more additional angled knives 301 may be attached to the auger 20 to provide additional cutting of loosened bridged bulk material. The additional cutting knife 301 may be attached to the upper flighting 216 and/or the lower flighting 215 either directly or indirectly behind a cutting knife 240. Furthermore, the additional cutting knife 301 may be a series of angled knives placed in series in proximity to each other, or, as illustrated, may be a single additional angled knife placed behind a cutting knife 240. The additional cutting knife 301 may comprise a blade 315 oriented to be angled upwards relative the cutting knife 240, and may be connected to the flighting 210 via a connector plate 305 as described with reference to Figure 3. Typically, the additional angled knife 301 has a blade 315, as shown in Figure 4B which shows the additional angled knife 301 in exploded view, with the blade 315 having an angle of between about 15° to about 110° from the floor 120 which is generally substantially horizontal. The blade 315 of the additional angled knife 301 may alternatively have an angle of between about 25° and about 90°, between about 30° and about 60°, at least 30°, at least 45° or alternatively may have an angle of approximately 45°. It is important that the additional angled knife 301 have an angle suitable for at least partially cutting into the loosened fibrous bulk material that may have bridged during rotation of the auger 20 so that the bridging is reduced or eliminated and the fibrous bulk material more easily falls to the bottom region of the auger 20 so that the cutting knives 240 are more effective in cutting the bulk material and/or the flighting 210 is more effective at mixing the bulk material.

Although Figures 4A, 4B and 4C illustrate only a single additional angled knife 301, it will be appreciated that a plurality of additional angled knives may be attached to the auger 20.

It is also contemplated that the cutting knife 240 and the angled knife 300 may integrated together into a single knife having a curved or bent blade.

The vertical auger may further include various devices for directing and guiding the bulk material as it mixes, such as a slide plate mounted to the lower flight. The slide plate may be as described in either of co-pending Canadian patent applications 2,627,001 and 2,641,928 or as described below with reference to the lower cutting blade. A vertical auger of the present invention may further include or may alternatively include one or more lower cutting blades as described below for cutting trapped material away from the discharge opening thereby freeing the trapped material and allowing for quicker discharge of the mixed bulk material.

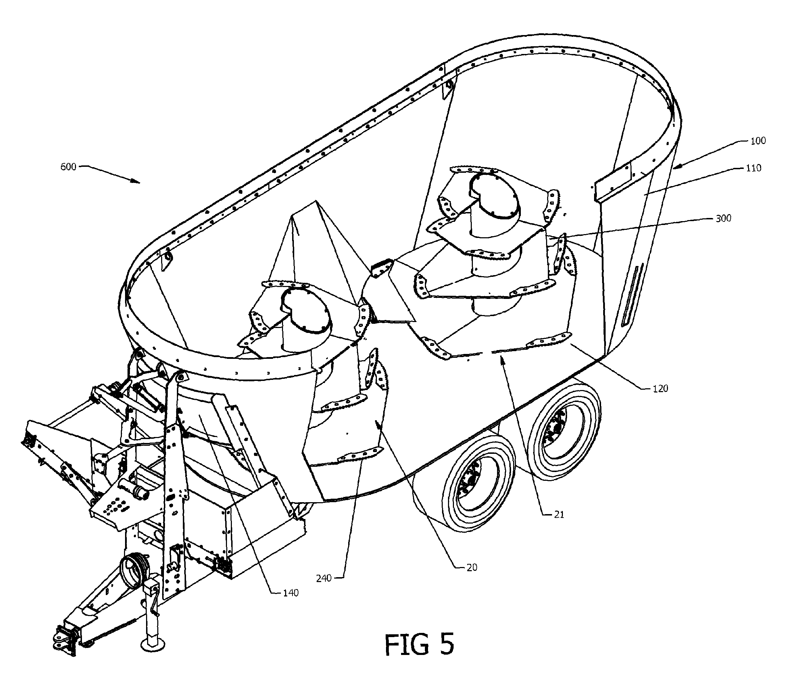

Figure 5 shows an illustrative embodiment of a twin auger vertical mixer 600. The twin auger vertical mixer 600 comprises a first vertical auger 20 and a second vertical auger 21. Each vertical auger 20 and 21 comprises an angled knife 300 oriented for at least partially cutting away bridged fibrous bulk material thereby allowing for fibrous bulk material to be more effectively cut by the cutting knives 240 on the auger 20 and 21. Cut and mixed bulk material is removed via the door 140 for use for example as feed, bedding, etc.

### Test Results and Observations

Field testing was carried out in Alabama using a vertical mixer model JL4575 and a model JL4425 from Jay-Lor International.

While field testing the angled knife on vertical mixers, it was found that hay processing time was cut by 30-40%.

The angled knife also allowed for more hay to be processed at one time. Dry hay processing in model JL4574 increased from approximately 1500 lbs to 2000 lbs with less spillage. On model JL4425, dry hay processing capacity increased from 1200 lbs to 2000 lbs also with less spillage.

The auger with cutting knives and an angled knife allowed the processing of approximately 33% more hay in the same amount of time than an auger with only cutting knives was capable of processing.

When two angled knives were placed on the auger, hay processing capacity increased even more and shortened processing time.

It was observed that the angled knives help to eliminate or reduce the problem of a hay bale core not processing.

The angled knives cut mixing time of complete Total Hay Mix Ration (THMR) by an average of 20-25%. No apparent increase in horsepower was required.

It was also observed that the new knives help unloading of THMR from the machine as it appears the knives work like a kicker to push bulk material out the door at more frequent intervals, and discharge of bulk material is smoother and more consistent.

The angled knives were tested on 4 farms utilizing different THMR rations, with the same or similar results.

### LOWER CUTTING BLADE

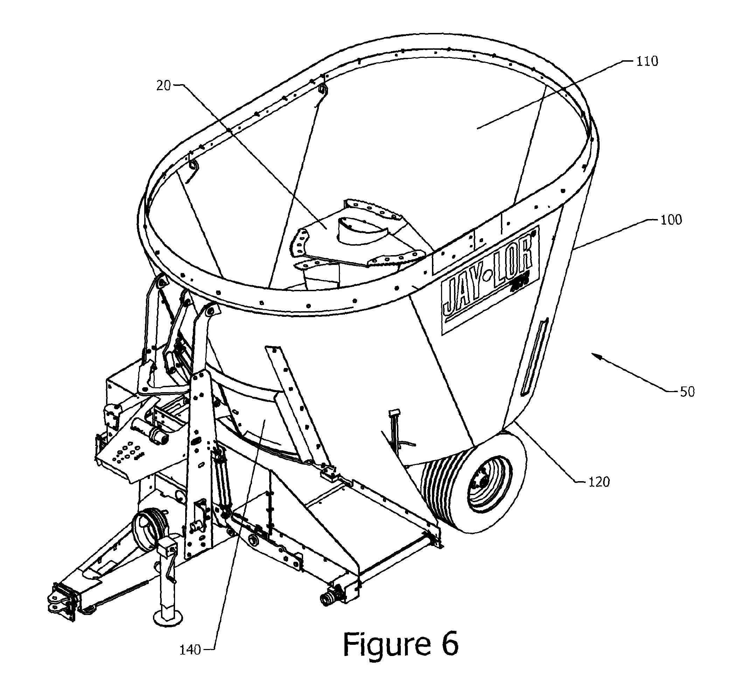

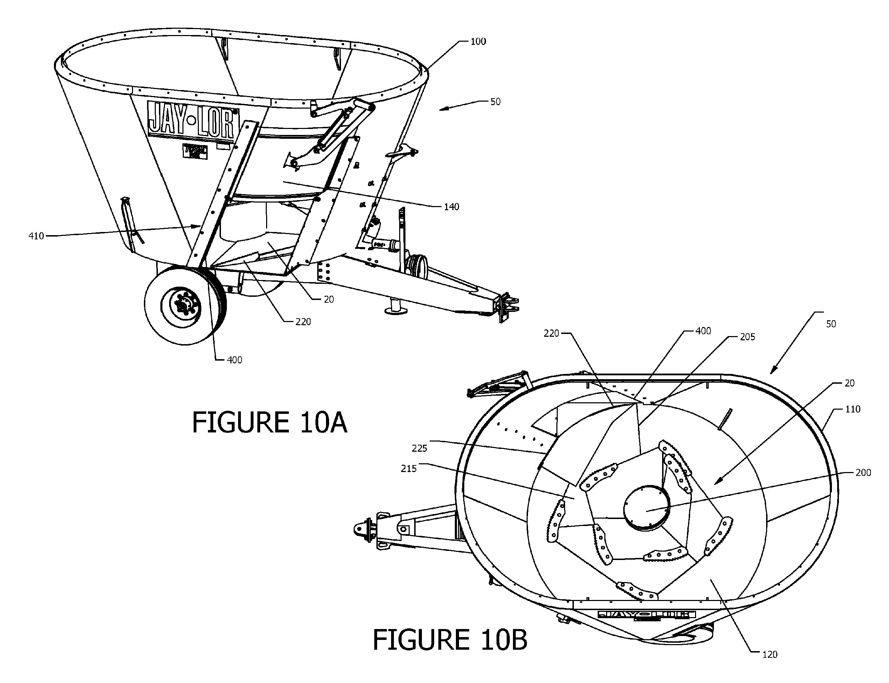

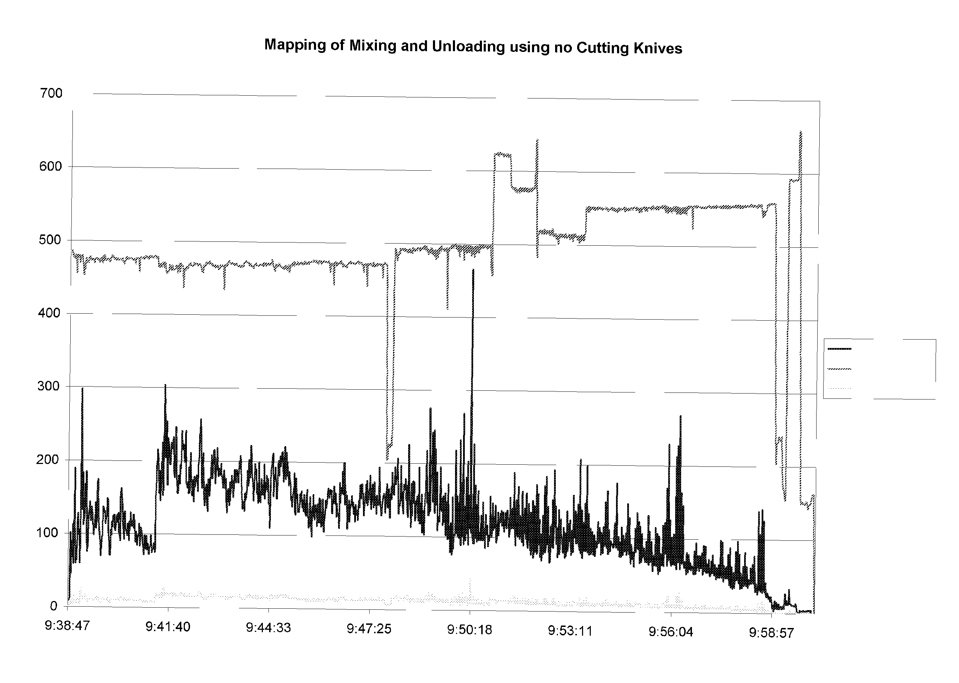

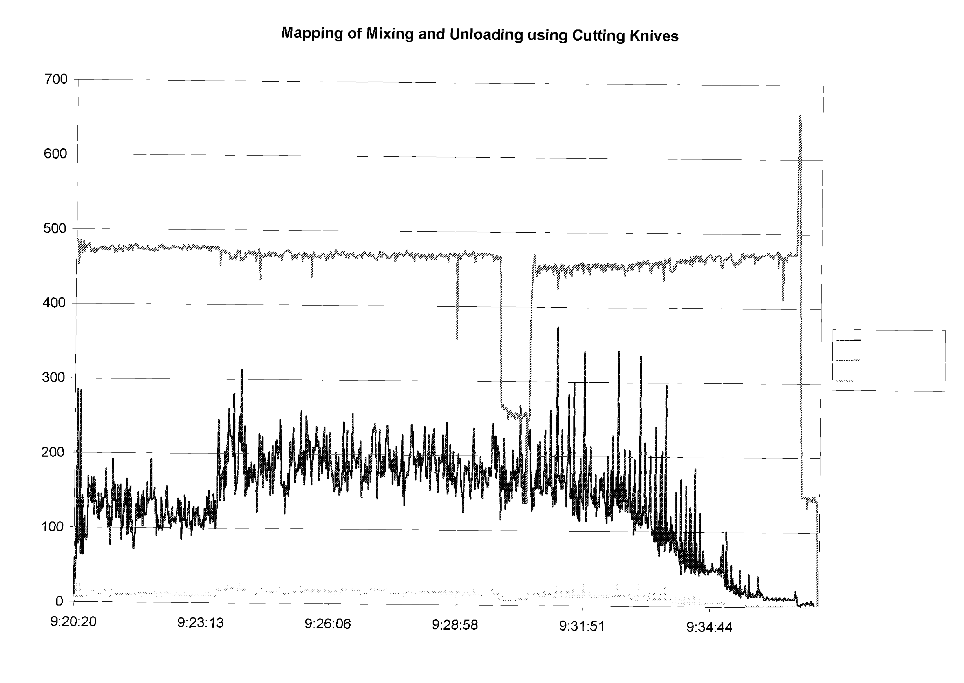

Another illustrative embodiment of a vertical mixer having an auger is shown with reference to Figure 6. A vertical mixer 50 has a mixing chamber 100 for receiving bulk material to be mixed. The mixing chamber 100 has an open top for receiving the bulk material, a floor 120, and a depending wall 110 defining the mixing chamber 100. A vertical auger 20 is situated in the mixing chamber 100 for mixing and cutting bulk material, such as straw, hay, grain, additives, etc. The mixing chamber 100 includes a door 140, shown in the closed position, for covering a discharge opening through which mixed bulk material is discharged from the mixing chamber 100 when the door 140 is opened. The discharge opening and door 140 may be situated on the front of the mixing chamber 100 as illustrated in Figure 6 or may alternatively be situated at any position around the mixing chamber 100 as will be appreciated by one of ordinary skill in the art and as illustrated for example in Figures 10A and 10B.

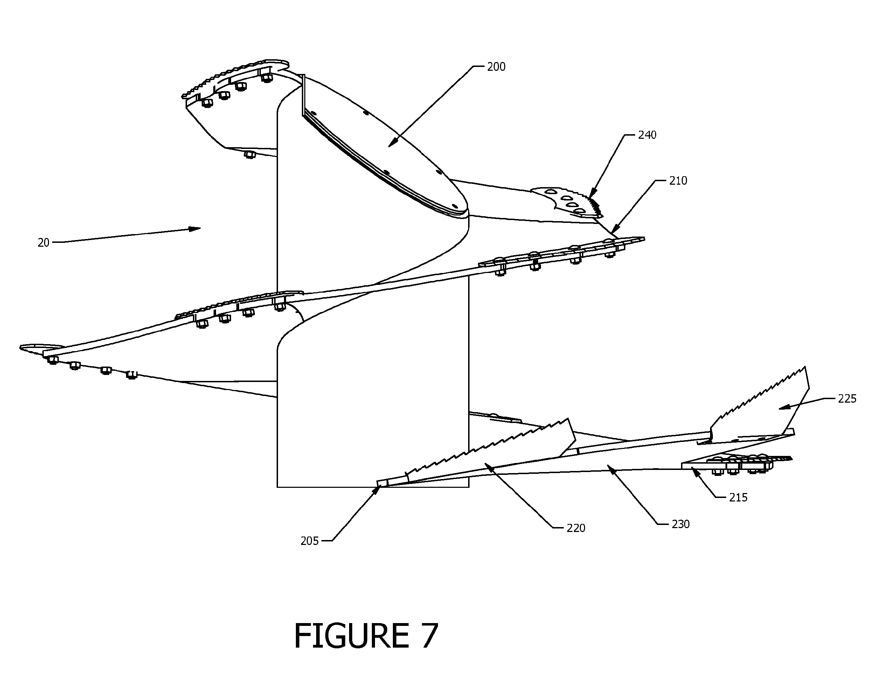

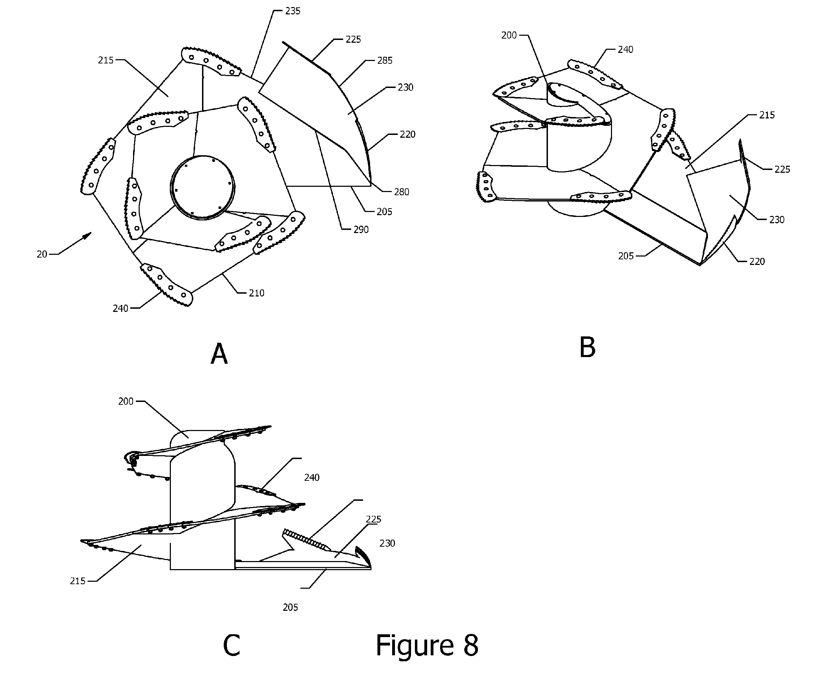

Figures 7 and 8A-8C show various views of an illustrative embodiment of an auger 20 for use in the mixing chamber of a vertical mixer. The auger 20 has an auger post 200 with flighting 210 attached thereto. The flighting 210 serves to mix and/or cut bulk material during rotation of the auger 20. Various configurations of flighting may be used to mix and/or cut bulk material in the mixing chamber. For example, the flighting may contain a plurality of flights such as a lower flight 215 and upper flighting including a top flight. It will be appreciated that the auger flighting 210 may contain more than two flights and that the flighting 210 may be tapered, expanding from the top flight to the lower flight 215. Alternatively, the flighting 210 may contain only a single flight, which for the purposes of the description, is referred to as the lower flight 215. It will also be appreciated that the lower flight 215, the upper flight, and any other flights described herein are typically joined as part of a connected, continuous flighting 210, though they need not be. The lower flight 215 has an outside edge 235 representing the outside footprint of the lower flight 215 and, in the case of a tapered flighting 210, the outside footprint of the flighting 210. The flighting 210 may be as described in co-pending Canadian Patent Application 2,627,001, U.S. Patent No. 5,863,122 or in U.S. Patent No. 5,462,354, all of which are incorporated herein by reference in their entirety.

The lower flight 215 terminates in a leading edge 205. The leading edge 205 may be elevated slightly above the floor 120 of the mixing chamber 100 and may be shaped to be substantially parallel to the floor.

The lower flight 215 may also include a flat section substantially parallel to the floor 120 of the mixing chamber 100 resulting in an increasing pitch between lower flight 215 and flighting thereabove over the span of the flat section. The flat section may be elevated slightly from the floor 120 of the mixing chamber 100 to minimize or prevent binding of bulk material between the floor 120 and the lower flight 215 of the auger 20. The flat section may be shaped to be elevated above the floor 120 of the mixing chamber 100 at a level higher than the leading edge 205.

The vertical auger 20 may further include various devices for directing and guiding the bulk material as it mixes, such as a slide plate 230, mounted to the lower flight 215. The slide plate 230 is typically connected to the lower flight 215 along a bottom edge 290. The slide plate 230 further includes a top edge 285 opposite the bottom edge 290 which may or may not extend beyond the outside edge 235 of the lower flight 215 towards the inner surface of the wall 110 of the mixing chamber 100 (shown in Figures 10A and 10B). The top edge 285 of the slide plate 230 may extend outside of the footprint of the lower flight 215 and may also be substantially proximate to at least a back edge 400 of a discharge opening 410 in the wall 110 of the mixing chamber 100 when passing by the back edge of the discharge opening during rotation of the auger 20 as illustrated, for example, in Figures 10A and 10B. This will be explained in further detail below. The slide plate 230 may terminate at the front end at a front corner 280 that may be proximate the front leading edge 205 of the lower flight 215.

The slide plate 230 may form part of the lower flight 215 and may not be a separate connected piece. It is therefore within the scope of the auger 20 to have a slide plate 230 which is integrated into the lower flight 215 through, for example, bending, cutting, shaping, etc.

As outlined above, and with reference to Figures 7, 8A-8C, and 10A-10B, vertical mixers tend to have difficulty discharging longer fibrous materials such as straw or hay. While discharging, some of the fibrous materials are trapped by wrapping around the back edge 400 of the discharge opening 410.

It has been determined that the use of a lower cutting blade 220 mounted near the periphery of the auger 20 is successful in alleviating this problem. As the auger 20 rotates, the lower cutting blade 220 cuts away the trapped materials thereby freeing the trapped materials and allowing for quicker and proper discharge of the mixed bulk material. Typically, the lower cutting blade 220 cuts the trapped material away from the back edge 400, most of which then falls through the discharge opening 410 onto a conveyor, if so mounted. The lower cutting blade 220 may be mounted either directly or indirectly to the lower flight 215 of the flighting 210 using any suitable manner, for example by bolting or welding the lower cutting blade 220 to the auger 20. The lower cutting blade 220 may be mounted in such a manner as to be proximate the back edge 400 of the discharge opening 410 when passing by the discharge opening 410 during rotation of the auger 20 so that the path of lower cutting blade 220 during rotation of the auger 20 intersects with material trapped around the back edge 400 of the discharge opening 410. Typically, material is trapped near the bottom of the back edge 400 and gradually builds up. As such, the lower cutting blade 220 may be mounted so that the path of the lower cutting blade 220 passes adjacent the back edge 400 of the discharge opening 410 and optionally the bottom area of the back edge 410 so that trapped material is cut away by the lower cutting blade 220.

The lower cutting blade 220 may be attached to a slide plate 230 connected to the lower flight 215 as illustrated in Figures 7, 8A-8C and 10A-10B. This can be especially effective if the slide plate 230 extends proximate the inner surface of the wall 110 of the mixing chamber 100 and is proximate the back edge 400 of the discharge opening 410 as the top edge 285 of the slide plate 230 rotates past the discharge opening 410. In such a circumstance, the lower cutting blade 220 may be mounted near the top edge 285 of the slide plate 230. To further increase the cutting ability of the lower cutting blade 220, the lower cutting blade 220 may be mounted such that the transverse axis of the lower cutting blade 220 is either substantially vertical to the floor 120 of the mixing chamber 100 or substantially parallel to the wall 110 of the mixing chamber 100 at the back edge 400 of the opening 410.

To further increase the cutting ability of the lower cutting blade 220, the lower cutting blade 220 may be serrated. The serrations increase both the cutting nature of the lower cutting blade 220 and further increase durability of the lower cutting blade 220 and decrease maintenance required on the lower cutting blade 220. The serrated area of the lower cutting blade 220 may comprise a coating to extend the life of the knife 220 by making it more durable or more corrosion resistant, such as but not limited to a galvanized coating or a tungsten carbide coating.

In an alternative embodiment, the lower cutting blade 220 may be mounted directly to the lower flight 215. The lower cutting blade 220 may be mounted such that the front end of the lower cutting blade 220 is proximate the leading edge 205 of the lower flight 215. In such an embodiment, the lower flight 215 may extend toward the wall 110 to be proximate the back edge 400 of the opening 410 when the lower cutting blade 220 passes by during rotation of the auger 20. The lower cutting blade 220 should have a connection point in a location on the auger 20 that allows for the lower cutting blade 220 to pass through material that may be trapped on the back edge 400 of the discharge opening 410. As outlined above, material is typically trapped in a lower region of the back edge 400 of the discharge opening 410.

The lower cutting blade 220 may have a shallow angled front corner to minimize the force required to push the lower cutting blade 220 through the bulk material and through the trapped material. More horsepower and therefore more fuel is required as the force required to push the cutting knife through the bulk material increases. An angle of, for example but not limited to, between about 5 and 35 degrees may be used, however, an angle of 1 or more degrees should be sufficient to cut away at least a portion of the trapped material. An angle of 15 degrees may be used. It should be appreciated that these angles are merely illustrative examples.

The lower cutting blade 220 may have a flat exterior side facing the inner wall 110 of the mixing chamber 100. The interior side of the cutting knife, opposite the exterior side, may include an angled top portion resulting in a sharpened edge on the top of the knife 220. The angled top portion may be serrated as outlined above. The serrated edge extends the operational life of the lower cutting blade 220. It is believed that the serrations impart a small transverse force on the bulk material thereby helping to mix the material. Placement of the lower cutting blade 220 on the slide plate 230 or the lower flight 215 can also aid in dislodging material from the wall 110 as well as from the back edge 400 of the discharge opening 410.

A second lower cutting blade 225 may optionally be used on the auger 20 to further increase the ability of the auger 20 to cut away material trapped on the back edge 400 of the discharge opening 410. The second knife 225 may have similar coatings and serrations as those described above with reference to the lower cutting blade 220. The second lower cutting blade 225 may be connected directly or indirectly to the lower flight 215 of the auger 20 and should be connected at a second connection point in a location on the auger 20 that allows for the lower cutting blade 225 to pass through material that may be trapped on the back edge 400 of the opening 410. The second connection point may be rearward of the first connection point on a periphery of either the lower flight 215 or near the top edge 285 of the slide plate 230. The second lower cutting blade 225 may be connected using any suitable method such as but not limited to, bolting or welding.

The second lower cutting blade 225 may be as described above with regard to the first lower cutting blade 220. The shallow angled front corner may be of the same or a different angle to that of the first lower cutting blade 220. For example, the first cutting knife may have a shallow angled front corner at an angle of about 15 degrees and the second lower cutting blade 225 may have a shallow angled front corner at an angle of about 20 degrees. It should be appreciated that these angles are merely illustrative examples. It is within the scope of this disclosure that the cutting knives 220 and 225 may have shallow angled front corners of any suitable angle for cutting away material trapped around the back edge 400 of the discharge opening 410.

Either one or both of the cutting knives 220 and 225 may be mounted at an angle such that the back end of the cutting knife, opposite the front shallow corner, tapers away from the inner surface of the wall 110 of the mixing chamber 100.

In one non-limiting example, the first and second cutting knives 220 and 225 have a similar length. The length of the cutting knives 220 and 225 may be, for example but not limited to, about 17 inches. It will be understood, however, that the cutting knives 220 and 225 may be of different lengths relative each other, and may be greater or less than 17 inches in length. It is within the scope of this disclosure that the cutting knives 220 and 225 are of any length suitable for cutting away material trapped around the back edge 400 of the discharge opening 410.

The lower cutting blade 220 and optionally the second lower cutting blade 225 cuts and removes trapped material from the opening 410 thereby allowing for quicker discharge of the bulk material from the mixing chamber 100. Quicker discharge results in less energy consumption, less operating time of the auger and vertical mixer and therefore less maintenance and less wear and longer operating life cycle of the mixer 50 and auger 20, and less man hours required for operation of the mixer 50 and therefore lower costs.

Removal of trapped material can also alleviate the pressure build-up on the wall 110 of the mixing chamber 100 when the auger 20 passes by the trapped material thereby reducing the stress imparted on the mixing chamber 100 and power unit as a result of the build-up of trapped material around the edge of the opening 400.

Additionally, a more even discharge of the mixed bulk material is achieved as clumps of trapped material are reduced. A build-up of material is reduced as a result of reducing the amount of material trapped around the back edge 400 of the discharge opening 410.

Although an auger with both one and two cutting knives has been illustrated, it is within the scope of the disclosure to use one, two or more cutting knives for removing material trapped on the discharge opening 410. For example, a plurality of knives, such as three or more knives, may be mounted to the lower flight 215 or a slide plate 230 for cutting away trapped material.

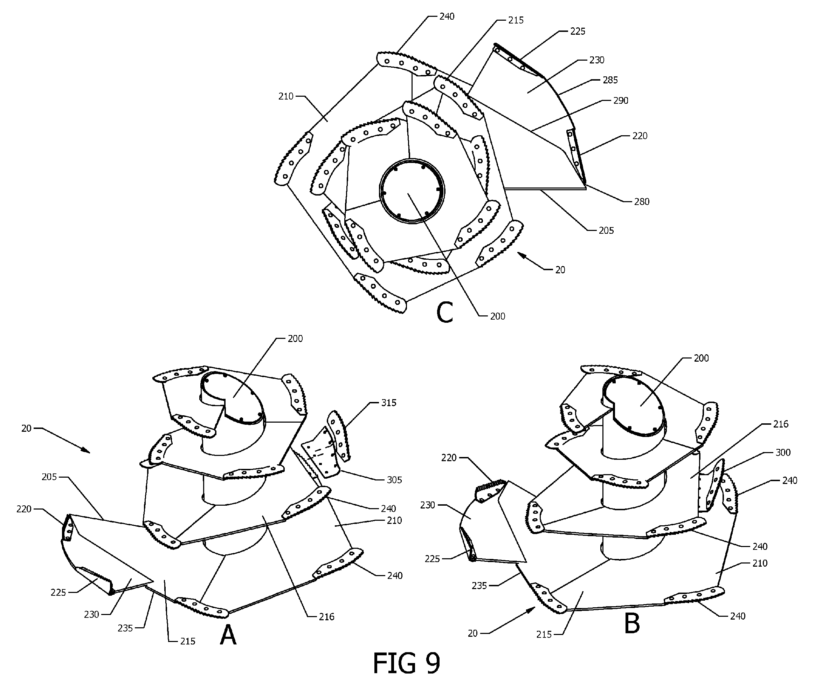

Figures 9A to 9C show an illustrative embodiment of an auger 20 comprising both the angled knife 300 as outlined above and a slide plate 230 with a lower cutting blade 220 and a second lower cutting blade 225 as described above.

A spacer device may be used to provide a supporting surface, such as a rub strip, a bearing surface, block or wear surface, or a rolling ball or wheel, for supporting the exterior region of the lower flight 215 or slide plate 230 when under load such as when the mixing chamber 100 is loading with bulk material. The loading of bulk material can cause the lower flight 215 to flex downwards, thereby angling the cutting knives 220 and/or 225 outwards toward the wall 110 of the mixing chamber 100. If the lower flight 215 or the optional slide plate 230 is too thin, the flexing can be sufficient to cause the cutting knives 220 and/or 225 to contact the inner surface of the wall 110 thereby damaging or wearing the wall 110 and/or cutting knives 220 and 225. The spacer device may be used to prevent or mitigate the flexing of the lower flight 215 and/or the slide plate 230. The spacer device may be connected to the lower flight 215 or the optional slide plate 230. The spacer device may be used to prevent the outer region of the lower flight of the auger from rubbing or contacting the floor and further the spacer device prevents the lower cutting blade from contacting or gouging the inside wall of the mixing chamber due to flexing of the lower flight when under load.

### Test Results and Observations

Test 1: Discharge time using auger without lower cutting blades and with lower cutting blades.

Figures 11A and 11B are graphs illustrating test results for unloading a load of mixed bulk material comparing an auger with no lower cutting blades and an auger with lower cutting blades. For each test run, a mixture of two bales of similar hay were placed in the vertical mixer and mixed/cut and then discharged. Mixtures of both test runs were cut to similar lengths. Figures 11A and 11B are graphs showing the torque, speed and power of the vertical mixer, mixing the two bales of hay with the door 140 closed and discharging the mixed and cut hay with the door 140 open. In the graphs, the door was opened and discharge was started right after the speed has a large drop. For example, in Figure 11A discharge began at approximately 9:48 and in Figure 11B discharge began at approximately 9:30. The graph of Figure 11A shows the results of a vertical mixer having an auger with no lower cutting blades while the graph of Figure 11B shows the results of a vertical mixer having an auger with first and second lower cutting blades. The time for discharge using an auger without any cutting blades was about 12 minutes. The time for discharge using an auger with cutting blades was about 6 minutes 30 seconds.

The present invention has been described with regard to a plurality of illustrative embodiments. However, it will be apparent to persons skilled in the art that a number of variations and modifications can be made without departing from the scope of the invention as defined in the claims.

## Claims

1. A vertical mixer for mixing bulk material, the vertical mixer comprising:
a mixing chamber for receiving the bulk material, the mixing chamber being defined by a floor and a peripheral wall, the mixing chamber comprising a discharge opening including a back edge, the discharge opening for discharging mixed bulk material, and a door for covering the discharge opening, the door moveable between an open and closed position;
a vertical auger in the mixing chamber, the vertical auger comprising
an auger post;
depending flighting comprising an outside edge defining the perimeter of the flighting, the flighting including upper flighting positioned above a lower flight;
an angled knife connected to the outside edge of the upper flighting, the angled knife comprising a blade oriented at an angle upward relative the adjacent flighting to at least partially cut loosened bulk material bridging in the mixing chamber.

2. The vertical mixer of claim 1, further comprising at least one cutting knife positioned on the outer edge of the flighting for cutting bulk material as the auger rotates, the cutting knife oriented at an angle closer to parallel with the floor of the mixing chamber than the angled knife and wherein the angled knife is mounted rearward and adjacent one of the cutting knives.

3. The vertical mixer of claim 1, wherein the angled knife is connected to the upper flighting in a section below the top of the flight.

4. The vertical mixer of claim 1, wherein the blade is oriented at an angle of from about 15° to about 110°, about 25° to about 90°, about 30° to about 90°, about 30° to about 60°, approximately 45°, at least approximately 30° or at least approximately 45° from the floor of the mixing chamber.

5. The vertical mixer of claim 1, wherein a front end of the blade is further from the auger post than a rear end of the blade to draw bulk material into the flighting.

6. The vertical mixer of claim 1, further comprising an additional angled knife connected to the lower flight or the upper flighting.

7. The vertical mixer of claim 6, wherein the additional angled knife is mounted rearward and adjacent the angled knife.

8. The vertical mixer of claim 1, wherein on the vertical auger the lower flight comprises a front leading edge and an outside edge defining an outside footprint of the lower flight; and the vertical auger further comprises:
a first lower cutting blade connected indirectly or directly to the lower flight of the vertical auger at a first connection point, the first lower cutting blade situated to pass proximate the back edge of the discharge opening during rotation of the auger to cut material trapped on the back edge of the discharge opening.

9. The vertical mixer of claim 8, wherein the first lower cutting blade is oriented to be substantially parallel to the peripheral wall at the back edge of the opening and is oriented to be substantially vertical.

10. The vertical mixer of claim 8, wherein the first lower cutting blade comprises a shallow angled front corner having an angle of between about 1 and 45 degrees or about 15 degrees.

11. The vertical mixer of claim 8, wherein the first lower cutting blade is mounted so that a back end of the first cutting knife is further from a point on the wall of the mixing chamber than a front end of the first lower cutting blade when passing the point during rotation of the auger.

12. The vertical mixer of claim 8, wherein the vertical auger further comprises:
a second lower cutting blade as defined in any one of claims 1 to 13 connected indirectly or directly to the lower flight of the vertical auger at a second connection point, the second lower cutting blade situated to pass proximate the back edge of the discharge opening during rotation of the auger to cut material trapped on the back edge of the discharge opening; and
wherein the first connection point is proximate the front leading edge of the lower flight and the second connection point is rearward of the first connection point.

13. The vertical mixer of claim 12, wherein the second lower cutting blade comprises a shallow angled front corner having an angle of between about 1 and 45 degrees or about 20 degrees.

14. The vertical mixer of claim 12, wherein the second lower cutting blade is mounted so that a back end of the second lower cutting blade is further from a point on the wall of the mixing chamber than a front end of the second lower cutting blade when passing the point during rotation of the auger.

15. The vertical mixer of claim 8, wherein the vertical auger further comprises:
a slide plate connected to the lower flight for guiding bulk material, the slide plate comprising:
a front corner;
a bottom edge; and
a top edge opposite the bottom edge;
the slide plate extending from the lower flight beyond the outside edge of the lower flight toward the peripheral wall of the mixing chamber; and
wherein the first lower cutting blade is connected to the slide plate.

16. A vertical mixer for mixing bulk material, the vertical mixer comprising:
a mixing chamber for receiving the bulk material, the mixing chamber being defined by a floor and a peripheral wall, the mixing chamber comprising a door for allowing exit of mixed bulk material;
a vertical auger in the mixing chamber, the vertical auger having an auger post and flighting including a lower flight; and
a spacer device directly or indirectly connected to the lower flight of the auger, the spacer device comprising a component extending below the bottom flight of the auger for contact with the floor of the mixing chamber.

17. The vertical mixer of claim 16, wherein the lower flight further comprises a first lower cutting blade connected indirectly or directly to the lower flight of the vertical auger at a first connection point, the first lower cutting blade situated to pass proximate the back edge of the discharge opening during rotation of the auger to cut material trapped on the back edge of the discharge opening; and
wherein the spacer device reduced flexing of the lower flight thereby preventing the lower cutting blade from gouging the wall of the mixer chamber during rotation of the auger.
